# EUROPEAN PATENT APPLICATION

(11) **EP 1 276 062 A1**
(43) Date of publication of application: **15.01.2003**
(21) Application number: 01410087.9
(22) Date of filing: 12.07.2001
(51) Int. Cl.: G06F 17/60

(54) **A method of providing user-specific data to an information source, a data carrier and a method of personalising a user's internet experience**

(71) Applicant: Hewlett-Packard Company, A Delaware Corporation, Palo Alto, CA 94304 (US)
(72) Inventor: Vicard, Dominique, 38190 Bernin (FR); Brebner, Gavin, 38410 St. Martin D'Uriage (FR)
(74) Representative: Lloyd, Richard Graham

(57) **Abstract**

A method of providing user-specific data to an information source to enable the information to be obtained in accordance with the user-specific data, the data being conveyed in encrypted form and wherein the data key used to provide the information source with unencrypted data is obtained using a broker.

## Description

### Background to and Field of the Invention

This invention relates to a method of providing user-specific data to an information source, to a data carrier and to a method of personalising a user's Internet experience.

In particular, although by no means exclusively, the invention relates to methods and apparatus for use in profiling (i.e. tailoring) on-line services such as the provision of web content, in accordance with data that is peculiar to the user concerned. Such methods and apparatus are known in themselves and commonly employ cookies and the like to inform information sources such as web servers of a range of user-specific data, so that the service supplied to the user may be tailored in accordance with that user's personal preferences.

Systems and devices are used in this area to personalise web pages so that, for example, advertisers may target users with on-line advertisements which are likely to be of interest to the user concerned. Similarly, automated personalisation of this type can be beneficial from the user's perspective, in that repeated on-line form filling, otherwise required to inform a service provider of the user's particular interests, is avoided.

However, although tailoring on-line services in this way does have benefits for both the user and the service provider, problems arise where personal data is collected and is used for purposes other than that originally stated. This problem is compounded by the fact that digital data, unless actively destroyed, can remain in existence almost in perpetuity, with this leading to serious privacy problems or at least a perception of such problems by the public at large. Although some service providers, when eliciting personal data from a user, may employ service-specific encryption techniques, this often does little to allay users' concerns that the data will not be used, at a later date, by unauthorised third parties. Moreover, although many service providers require users to endorse (i.e. accept the terms of) privacy statements, whereby service providers undertake not to allow unauthorised use of the data, such trust-based measures have recently been shown to be insufficient, and it is therefore an object of the present invention, in broad terms, to overcome or at least to reduce these and other problems.

### Summary of the Invention

In accordance with a first aspect of the present invention, there is provided a method of providing user-specific data to an information source to enable the information to be obtained in accordance with the user-specific data, the data being conveyed in encrypted form and wherein the data key used to provide the information source with unencrypted data is obtained using a broker.

In this way, it will be understood that, by exerting appropriate controls on the broker, access to the data key may be restricted in accordance, for example, with user commands, and/or preferences.

Preferably, the encrypted data is conveyed using the broker. Conveniently, the broker forwards the data to the information source without disclosing the origin of the data.

From this, it will be understood that an important security feature is obtained: by not disclosing the origin of the data (e.g. the identity/location of the user), the information source is unable to make much or any effective unauthorized use of the user-specific data.

In order to mask the origin of the data, the broker (which may be a proxy server, for example) may record the origin of the data, mark the data in a corresponding manner, and forward the thus-marked data to the information source. Using this mark (which may comprise a digital code), the broker, upon receipt of the information from the information source, may identify the intended recipient of the information and return it to the user, as appropriate.

The data key may be symmetric and may be deposited with the broker in encrypted form. Preferably, the data key is generated randomly.

The data key may be encrypted using a private exchange key, and the data key may be decrypted using a public exchange key, conveyed with the data.

The information may be encrypted prior to being returned to a user. The information preferably is encrypted using a symmetric information key. As with the data key, the information key preferably is randomly generated.

The information key may be encrypted using the or an additional public exchange key, and may be decrypted using the or an additional private exchange key.

The encrypted data and the public exchange key may be conveyed in or using a carrier. The carrier preferably is a software agent, and conveniently may interact with the information source to divulge user-specific data in response to queries from or on behalf of the information source.

From this, it will be understood that the interaction (which may be effected using an Application Program Interface) enables user-specific information to be provided upon request, but that it does not allow free, unregulated, access to all the user-specific data. In contrast, the arrangement allows the information source to elicit information peculiar to its requirements, thus enabling the information obtained from the source to be tailored in accordance with certain facets of the user-specific data, without disclosing excess or inappropriate data to the information source.

The data may comprise a plurality of data sets, wherein each set can only be decrypted with a set-specific data key.

Preferably, the broker transmits the data key to the agent in response to a request from the agent, the request including a source identifier whereby the identity of the information source may be established.

Preferably, the broker logs or otherwise records each such request.

As will be understood, this logging step provides a still further layer of security, as the user may review the request logs on demand, whereby an indication may be obtained of which entities (i.e. which information sources) have accessed the user-specific data using the data key. Conveniently, the broker logs or records the requests in accordance with each thus-identified information source: in this way, the number of requests dispatched by or on behalf of a particular information source may be monitored.

Conveniently, the broker is authorised to transmit the data key for a limited period only, after which key requests will not be complied with. In addition, or as an alternative, a data key may be rendered inoperative subsequent to the unencrypted data being divulged. The data key may be rendered inoperative by the agent, by destroying, overwriting or otherwise corrupting the data key.

Conveniently, the agent is operative to carry out an integrity check prior to being conveyed to the broker.

The integrity check may comprise generating an agent digest and comparing the digest with a trusted control digest, which control digest may be held by a certification authority. The digest may be passed to the certification authority in encrypted form, and preferably is encrypted using a private integrity key. Conversely, the digest may be decrypted by the certification authority using a public integrity key. As will be understood by those well versed in the relevant art, this enables the integrity of the agent and the origin of the digest to be checked by the certification authority, as use, by the agent, of an inappropriate private integrity key would result in no or unsatisfactory decryption being possible by the certification authority.

In accordance with a second aspect of the present invention, there is provided a method of providing user-specific data to an information source to enable the information to be obtained in accordance with the user-specific data, the data being conveyed in encrypted form and wherein the data key used to provide the information source with unencrypted data is released by a key source only when the key source is appropriately authorised to do so.

The key source may be operative to release the data key in response to predetermined request criteria such as the location/identity of the requestor, the time at which the request is made and/or the number of previous occasions upon which a requestor has made the same or a similar request.

In accordance with a third aspect of the present invention, there is provided a data carrier for use in providing encrypted user-specific data to an information source to enable the information to be obtained in accordance with the user-specific data, the carrier comprising a module operative, in response to queries dispatched by or on behalf of the information source, to divulge unencrypted user-specific data to or for use by the information source.

Preferably, the carrier is a software agent, with the module conveniently being provided by an Application Program Interface.

The module may be operative to obtain, from a third party, a data key, whereby the unencrypted data may be divulged to the information source. The data carrier may be as described in one or more of the preceding paragraphs.

In accordance with a fourth aspect of the present invention, there is provided a method of providing user-specific data to an information source to enable the information to be obtained in accordance with the user-specific data, the data being conveyed in encrypted form in or using a carrier, the carrier comprising a module which, in response to queries dispatched by or on behalf of the information source, divulges unencrypted user-specific data to or for use by the information source.

The invention, in its fourth aspect, may comprise one or more features described in relation to the first three aspects of the present invention.

In accordance with a fifth aspect of the present invention, there is provided a method of personalising a user's Internet experience comprising conveying, with or in conjunction with a web page request, a carrier comprising user-specific data in encrypted form, the carrier comprising a module operative, in response to queries dispatched by or on behalf of the web page content provider, to divulge unencrypted user-specific data whereby the page returned may be tailored in accordance with the user-specific data.

Preferably, the carrier is conveyed via a broker, the broker being operative to forward the carrier to an appropriate web server without disclosing, to the server, the origin of the data.

Conveniently, the carrier is a software agent, with the module being provided by an Application Program Interface.

The invention, in its fifth aspect, may comprise one or more of the features described in relation to the first four aspects.

In accordance with a sixth aspect of the present invention, there is provided a method of providing user-specific data to an information source to enable the information to be obtained in accordance with the user-specific data, the data being conveyed in encrypted form, the data key used to provide the information source with unencrypted data being obtained using a broker and wherein the data key is conveyed using a carrier in the form of a software agent.

### Brief Description of the Drawings

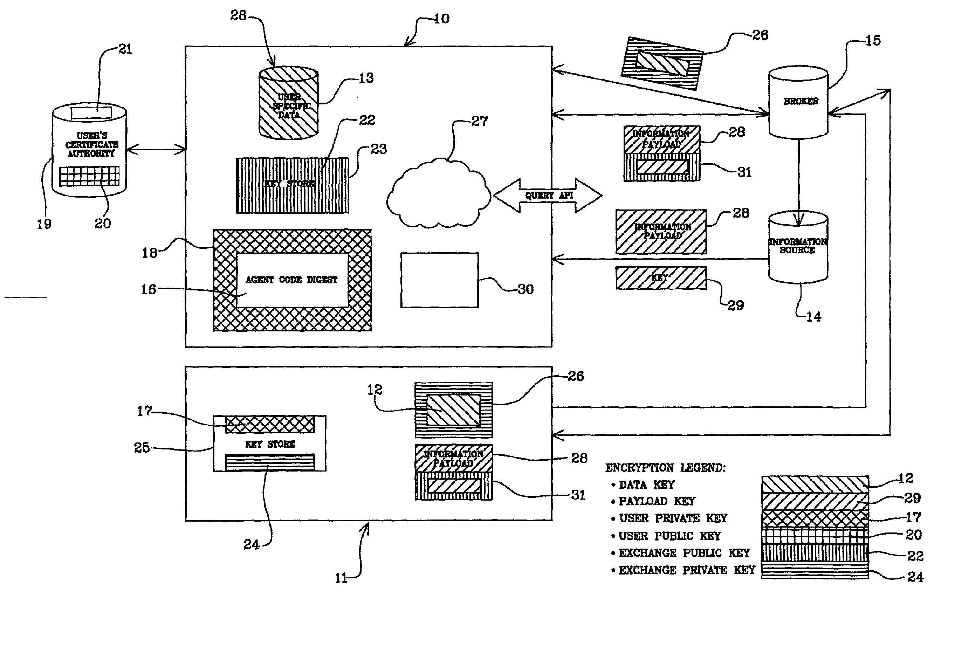

The invention, in its various aspects, will now be described in greater detail but strictly by way of example only, by reference to the accompanying drawing, which illustrates, in schematic form, how the invention, in its various aspects, can best be put into practice.

### Best Mode of the Invention

Broadly speaking, use of the present invention relies upon a software agent 10 written using a mobile code such as Java which, at least initially, is provided on a user's workstation 11 or on a non-volatile data storage medium (not shown) readable by the workstation 11. Using an appropriate user/agent interface, user-specific data is transferred to the agent, with the transfer encompassing a symmetric encryption step using a randomly generated data key 12. This key is generated, in generally conventional manner, using a triple DES or AES (Advanced Encryption Standard) cryptography method, with the key length (56, 128 or even 256 bits) being selected to ensure a high degree of data confidentiality. The amount - and type - of data (which is shown in encrypted form at 13) that is transferred to the agent 10 will depend upon the type of service/information that the user wishes to access. For example, where the user wishes to access an employment agency Website, the data transferred to the agent 10 may include details of the user's qualifications, age, experience, current salary and salary expectations. On the other hand, if the user wishes to subscribe to a personalised sports news service, the data may include details of the user's preferred sports and the format and frequency with which the user wishes to be notified of certain events or occurrences. It will also be appreciated that "excess" data may be transferred to the agent, in that some of the data transferred may not in fact be used by the target service. This, however, does not cause any privacy problems, as the agent is configured to release data to a target service only in response to certain queries.

In a preferred embodiment, the data includes a pointer (such as a redirect command) that causes any data flow between the user and a target service (information source) 14 to be channelled through a broker 15.

The broker 15, which may be provided by a proxy web server, thus constitutes an electronic "stepping stone" and acts to receive and forward data from and to the user's workstation and the information source 14.

When all the appropriate data has been transferred in encrypted form to the agent 10, the agent carries out an integrity check by generating, using the agent code, an agent code digest, using an appropriate digest algorithm. The digest 16 is then encrypted with a user private key 17, and the encrypted digest 18 is then sent to a trusted certification authority 19 for verification. The certification authority, which, in generally conventional manner, has previously been provided with a copy of the user's public key 20, decrypts the encrypted digest 18 and compares the unencrypted digest 16 with a control digest 21 located in an appropriate data store under the control of the certification authority. This, as will be appreciated, has two effects. The first is that successful decryption of the encrypted digest 18 confirms the origin of the encrypted digest 18, as the user's private key 17 was used to effect the encryption. Had a different private key been used, the certification authority would not be able to decrypt the encrypted digest using the user's public key 20. In addition, comparison of the decrypted digest with the control digest enables the certification authority to confirm that the agent code has not been tampered, altered or otherwise corrupted in any way.

Should this integrity test fail, an appropriate warning may be conveyed to the user via the workstation 11, and the agent 10 will not thereafter be able to engage in any data transfer processes, which could compromise the security of the user's data.

In the event of a satisfactory integrity check, however, the agent 10, which also carries an exchange public key 22 in a key store 23, is sent from the workstation 11 towards the information source 14, via the broker 15. The broker 15, in forwarding the agent towards the information source 14, is operative to hide or disguise the origin of the agent 10, so that even in the event that the user-specific data passes to an unauthorised entity, the data cannot be tied to the individual, network or workstation from which it originated.

The broker 15 is also supplied, by the workstation 11, with an encrypted form of the data key 12. The data key 12 is encrypted using an exchange private key 24, obtained from a user's key store 25. The encrypted data key 26 is then held by the broker 15 until the broker receives a key request from the agent 10, as described in more detail hereafter.

When the information source receives the agent, the agent is loaded and activated, which then allows the agent to release certain parts of the user-specific data in response to queries generated by the information source 14. Thus, using an appropriate API (Application Program Interface) 27, the information source queries the agent 10 by asking specific questions that can be answered using the user-specific data. Thus, in response to such a query (e.g. to identify the age of the user), the agent asks the broker 15 to supply it with the encrypted data key 26, to enable a relevant part of the user-specific data to be accessed. To effect this, the encrypted data key 26, encrypted using the exchange private key 24, is decrypted using the exchange public key 22 contained within the agent's key store 23. Using the thus-decrypted data key 12, user-specific data relating to the particular query can be unlocked from the encrypted data store 28, and is passed to the information source via the broker 15. Subsequently, the agent renders the data key inoperative, such as by destroying, overwriting or otherwise corrupting the key, to ensure that the key does not remain available in unencrypted form for any longer than is absolutely necessary. As an additional security measure, the broker 15 logs each occasion on which the encrypted data key 26 is requested by the agent, and records the nature of the unencrypted data that is passed from the agent to the information source 14. Using this log, a user can check what types of user-specific data are being accessed by a given information source, which can be used to verify that the user-specific data is contained securely within the agent 10. Thus, should the broker log indicate that a sports news service has obtained, from the agent 10, user-specific data concerning a user's income, dietary habits or marital status, for example, this may indicate that the data key 12 is no longer safely encrypted and that a security breach has occurred.

Using the API 27, the information source 14 supplies the agent 10 with an information payload 28 encrypted using a randomly generated DES payload key 29, with the encrypted information 28 being stored within a payload container 30 provided in the agent 10. A copy of the payload key is also passed to the agent. Using the exchange public key 22, the agent 10 encrypts the payload key 29 and the agent 10 - with its loaded payload container 30 - is then returned to the user via the broker 15. Using the user's exchange private key 24, the encrypted payload key 31 is decrypted, with the thus-decrypted payload key 29 then being used by the workstation 11 to decrypt the information payload 28.

Those skilled in the art will of course understand that "direct" access to the agent by the information source may not in fact be needed. The relevant data could alternatively be accessed remotely using a mechanism such as Java's RMI (Remote Method Interface) by which an effective communication link can be established between the source and the agent. Such a "remote" approach could provide an additional security feature to the system, as the agent code would not be made available to be hacked or corrupted.

As will be appreciated from the preceding paragraphs, the invention allows user-specific data to be used to tailor information received from an information source in a highly secure manner. In brief, this is achieved by the use of the broker 15, which removes or disguises the origin of the agent supplied by the workstation 11 over (for example) an Internet platform. Although the broker 15 receives limited parts of the user-specific data from the agent, and forwards these to the information source 14, the broker does not have unrestricted access to the unencrypted user-specific data, as the broker does not have an unencrypted form of the data key 12. Similarly, although the broker can receive an encrypted information payload from the agent, and forward this to the workstation 11, the broker does not have unrestricted access to the information source 14, and cannot decrypt the encrypted information payload 28 as it does not itself have access to the exchange private key 24.

Moreover, the target service (information source) 14 has no direct access to any of the user-specific data, as it to has no access to the data key 12, and is only able to obtain the encrypted data key 26 from the broker 15 when the broker is appropriately authorised to release it.

Thirdly, the data log maintained by the broker 15 can be used to inform a user when and by whom (or by what) the user's data has been accessed. Should this reveal that a particular information source appears to be using the agent 10 inappropriately (by asking questions that do not relate to the core activities of the information source), access to the encrypted data key 26 may be refused by the broker 15, if so instructed by the user.

From this, it will be understood that the invention provides, in particular, a highly secure and efficient method by which a user's Internet (e.g. web browsing) experience may be personalised, in that a requested web page can be tailored in accordance with the user's particular interests or preferences, without the user having to disclose unencrypted personal data as has hitherto often been required.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of providing user-specific data to an information source to enable the information to be obtained in accordance with the user-specific data, the data being conveyed in encrypted form and wherein the data key used to provide the information source with unencrypted data is obtained using a broker.

2. A method according to Claim 1 wherein the encrypted data is conveyed using the broker.

3. A method according to Claim 1 or Claim 2 wherein the broker forwards the data to the information source without disclosing the origin of the data.

4. A method according to Claim 1, Claim 2 or Claim 3 wherein the data key is symmetric and is deposited with the broker in encrypted form.

5. A method according to Claim 4 wherein the data key is encrypted using a private exchange key.

6. A method according to Claim 4 or Claim 5 wherein the data key is decrypted using a public exchange key, conveyed with the data.

7. A method according to any one of the preceding claims wherein the information is encrypted prior to being returned to a user.

8. A method according to Claim 7 wherein the information is encrypted using a symmetric information key.

9. A method according to Claim 8 wherein the information key is encrypted using a public exchange key.

10. A method according to Claim 8 or Claim 9 wherein the information key is decrypted using a private exchange key.

11. A method according to any one of Claims 6 to 10 wherein the encrypted data and the public exchange key are conveyed in or using a carrier.

12. A method according to Claim 11 wherein the carrier is a software agent.

13. A method according to Claim 12 wherein the agent interacts with the information source and divulges user-specific data in response to queries from or on behalf of the information source.

14. A method according to any one of the preceding claims wherein the data comprises a plurality of data sets and wherein each set can only be decrypted with a set-specific data key.

15. A method according to Claim 12, Claim 13 or Claim 14 wherein the broker transmits a data key to the agent in response to a request from the agent, the request including a source identifier whereby the identity of the information source may be established.

16. A method according to Claim 15 wherein the broker logs each such request.

17. A method according to any one of the preceding claims wherein the broker is authorised to transmit the data key for a limited period, after which key requests will not be complied with.

18. A method according to any one of the preceding claims wherein the data key is rendered inoperative subsequent to the unencrypted data being divulged.

19. A method according to Claim 18 wherein the data key is rendered inoperative by the agent, by destroying, overwriting or otherwise corrupting the data key.

20. A method according to any one of Claims 12 to 19 wherein the agent carries out an integrity check prior to be conveyed to the broker.

21. A method according to Claim 20 wherein the integrity check comprises generating an agent digest and comparing the digest with a trusted control digest.

22. A method according to Claim 21 wherein the control digest is held by a certification authority.

23. A method according to Claim 22 wherein the digest is passed to the certification authority in encrypted form, the digest being encrypted using a private integrity key and decrypted by the certification authority using a public integrity key.

24. A method of providing user-specific data to an information source to enable the information to be obtained in accordance with the user-specific data, the data being conveyed in encrypted form and wherein the data key used to provide the information source with unencrypted data is released from a key source only when the key source is appropriately authorised to do so.

25. A method according to Claim 24 wherein the key source is operative to release the data key in response to predetermined request criteria.

26. A method according to Claim 24 or Claim 25 further comprising one or more of the features of Claims 1 to 23.

27. A data carrier for use in providing encrypted user-specific data to an information source to enable the information to be obtained in accordance with the user-specific data, the carrier comprising a module operative, in response to queries dispatched by or on behalf of the information source, to divulge unencrypted user-specific data to or for use by the information source.

28. A method according to Claim 27 wherein the carrier is an agent and the module is an Application Program Interface.

29. A method according to Claim 27 or Claim 28 wherein the module is operative to obtain, from a third party, a data key, whereby the unencrypted data may be divulged to the information source.

30. A data carrier according to Claim 27, Claim 28 or Claim 29 further comprising one or more of the features set out in Claims 12 to 26.

31. A method of providing user-specific data to an information source to enable the information to be obtained in accordance with the user-specific data, the data being conveyed in encrypted form in or using a carrier, the carrier comprising a module, which in response to queries dispatched by or on behalf of the information source, divulges unencrypted user-specific data to or for use by the information source.

32. A method according to Claim 31 further comprising one or more of the features of Claims 1 to 30.

33. A method of personalising a user's Internet experience comprising conveying, with or in conjunction with a web page request, a carrier comprising user-specific data in encrypted form, the carrier comprising a module operative, in response to queries dispatched by or on behalf of the web page content provider, to divulge unencrypted user-specific data, whereby the page returned may be tailored in accordance with the user-specific data.

34. A method according to Claim 33 wherein the carrier is conveyed via a broker, the broker being operative to forward the carrier to an appropriate web server without disclosing to the server the origin of the data.

35. A method according to Claim 33 or Claim 34 wherein the carrier is a software agent.

36. A method according to Claim 33, Claim 34 or Claim 35 further comprising one or more of the features set out in Claims 1 to 32.

37. A method of providing user-specific data to an information source to enable the information to be obtained in accordance with the user-specific data, the data being conveyed in encrypted form, the data key used to provide the information source with unencrypted data being obtained using a broker and wherein the data key is conveyed using a carrier in the form of a software agent.
